# EUROPEAN PATENT APPLICATION

(11) **EP 4 510 322 A1**
(43) Date of publication of application: **19.02.2025**
(21) Application number: 22964681.5
(22) Date of filing: 07.11.2022
(51) Int. Cl.: H01M 50/147, H01M 50/30

(54) **END COVER ASSEMBLY, BATTERY CELL, BATTERY, AND ELECTRIC DEVICE**

(71) Applicant: Contemporary Amperex Technology Co., Limited, Ningde, Fujian 352100 (CN)
(72) Inventor: YANG, Kaihuan, Ningde, Fujian 352100 (CN); CHENG, Qi, Ningde, Fujian 352100 (CN); ZHOU, Wenlin, Ningde, Fujian 352100 (CN); MEI, Xiang, Ningde, Fujian 352100 (CN); ZHOU, Jian, Ningde, Fujian 352100 (CN); LI, Quankun, Ningde, Fujian 352100 (CN)
(74) Representative: von Tietzen und Hennig, Nikolaus
(86) International application number: PCT/CN2022/130354
(87) International publication number: WO 2024/098202

(57) **Abstract**

This application discloses an end cover assembly (211), a battery cell (21), a battery (100), and an electric apparatus. The end cover assembly (211) includes a cover body (2111), a first rib (2113), and a second rib (2114), where the cover body (2111) is provided with a pressure relief mechanism (2112), the first rib (2113) and the second rib (2114) are both disposed on the cover body (21111), the first rib (2113) is disposed around the pressure relief mechanism (2112), and the second rib (2114) is disposed on a side of the first rib (2113) facing away from the pressure relief mechanism (2112). With the foregoing technical solution used, use safety of the battery cell (21) is effectively improved.

## Description

### TECHNICAL FIELD

This application relates to the field of battery technologies, and specifically, to an end cover assembly, a battery cell, a battery, and an electric apparatus.

### BACKGROUND

Battery cells are widely used in electronic devices such as mobile phones, notebook computers, electric bicycles, electric vehicles, electric airplanes, electric ships, electric toy cars, electric toy ships, electric toy airplanes, and electric tools. In the development process of battery technology, in addition to the need to focus on the performance of battery cells, the use safety of battery cells is also a non-negligible issue.

However, because battery cells generate gas during charging and discharging, when a battery cell experiences rapid gas generation, the internal pressure of the battery cell rises rapidly. In this case, the cover body and housing of the battery cell are often separated from each other due to failure to open the pressure relief mechanism of the battery cell in a timely manner, leading to a decrease in the use safety of the battery cell.

### TECHNICAL PROBLEMS

One objective of embodiments of this application is to provide an end cover assembly, a battery cell, a battery, and an electric apparatus, so as to solve the technical problem of decreased use safety of battery cells in the related art due to failure to open the pressure relief mechanism of the battery cell in a timely manner.

### TECHNICAL SOLUTIONS

To solve the foregoing technical problem, the technical solutions used in the embodiments of this application are as follows.

According to a first aspect, an embodiment of this application provides an end cover assembly including:
a cover body provided with a pressure relief mechanism;
a first rib disposed on the cover body and around the pressure relief mechanism; and
a second rib disposed on the cover body and on a side of the first rib facing away from the pressure relief mechanism.

The end cover assembly provided in this embodiment of this application has the following beneficial effects: In the end cover assembly provided in this embodiment of this application, the first rib and the second rib are disposed on the cover body, the first rib is disposed around the pressure relief mechanism, and the second rib is disposed on the side of the first rib facing away from the pressure relief mechanism, effectively enhancing strength of a portion of the cover body located on an outer peripheral side of the pressure relief mechanism. In this way, even if internal pressure of the battery cell is high, the portion of the cover body located on the outer peripheral side of the pressure relief mechanism does not undergo significant deformation, such that stress can be effectively concentrated on a weak structure of the pressure relief mechanism, enabling the pressure relief mechanism to be opened in a timely manner to discharge gas accumulated inside the battery cell, thereby effectively reducing the risk of separation between the cover body and the housing of the battery cell, and effectively improving use safety of the battery cell.

In some embodiments of this application, the second rib is provided in plurality, the second ribs being provided on two opposite sides of the first rib.

With the foregoing technical solution used, the strength of the portion of the cover body located on the outer peripheral side of the pressure relief mechanism is further enhanced, enabling the pressure relief mechanism to be opened more quickly to discharge the gas accumulated inside the battery cell, thereby further reducing the risk of separation between the cover body and the housing of the battery cell, and further improving the use safety of the battery cell.

In some embodiments of this application, the first rib and the plurality of second ribs are distributed to form a symmetrical structure.

With the foregoing technical solution used, consistency of the strength on two opposite sides of the portion of the cover body located on the outer peripheral side of the pressure relief mechanism is effectively improved, which effectively avoids uneven stress on the whole cover body due to the stress being concentrated on one side of the portion of the cover body located on the outer peripheral side of the pressure relief mechanism, thereby further reducing the risk of separation between the cover body and the housing of the battery cell, and further improving the use safety of the battery cell.

In some embodiments of this application, the second rib is provided in plurality, the plurality of second ribs being distributed around the first rib.

With the foregoing technical solution used, the strength of the portion of the cover body located on the outer peripheral side of the pressure relief mechanism is further enhanced, enabling the pressure relief mechanism to be opened more quickly to discharge the gas accumulated inside the battery cell, thereby further reducing the risk of separation between the cover body and the housing of the battery cell, and further improving the use safety of the battery cell.

In some embodiments of this application, the first rib and the plurality of second ribs are distributed to form a symmetrical structure.

With the foregoing technical solution used, consistency of the strength at various positions of the portion of the cover body located on the outer peripheral side of the pressure relief mechanism is effectively improved, which effectively avoids uneven stress on the whole cover body due to the stress being concentrated at one position of the portion of the cover body located on the outer peripheral side of the pressure relief mechanism, thereby further reducing the risk of separation between the cover body and the housing of the battery cell, and further improving the use safety of the battery cell.

In some embodiments of this application, the second rib extends along a direction from the first rib to an edge of the cover body.

With the foregoing technical solution used, the strength of the portion of the cover body located on the outer peripheral side of the pressure relief mechanism is further enhanced, enabling the pressure relief mechanism to be opened more quickly to discharge the gas accumulated inside the battery cell, thereby further reducing the risk of separation between the cover body and the housing of the battery cell, and further improving the use safety of the battery cell.

In some embodiments of this application, one end of the second rib is connected to the first rib, and the other end of the second rib extends to the edge of the cover body.

With the foregoing technical solution used, the strength of the portion of the cover body located on the outer peripheral side of the pressure relief mechanism is further enhanced, enabling the pressure relief mechanism to be opened more quickly to discharge the gas accumulated inside the battery cell, thereby further reducing the risk of separation between the cover body and the housing of the battery cell, and further improving the use safety of the battery cell.

In some embodiments of this application, the end cover assembly further includes a third rib disposed on an edge of the cover body, and a side of the third rib facing away from the pressure relief mechanism is flush with a side wall of the cover body.

With the foregoing technical solution used, a welding area between the end cover assembly and the housing of the battery cell can be effectively increased without occupying too much internal space of the housing of the battery cell, thereby effectively enhancing welding strength between the end cover assembly and the housing of the battery cell, further reducing the risk of separation between the cover body and the housing of the battery cell, and further improving the use safety of the battery cell.

In some embodiments of this application, the third rib is disposed around the pressure relief mechanism.

With the foregoing technical solution used, sizes of weld marks between an outer peripheral wall of the end cover assembly and an inner peripheral wall of the housing of the battery cell become more uniform, so that stress is more evenly distributed on the outer peripheral wall of the end cover assembly, which further enhances the welding strength between the end cover assembly and the housing of the battery cell, further enhances overall structural strength of the cover body, and further reduces deformation of the cover body when the internal pressure of the battery cell is high, thereby further reducing the risk of separation between the cover body and the housing of the battery cell, and further improving the use safety of the battery cell.

In some embodiments of this application, the second rib is connected between the first rib and the third rib.

With the foregoing technical solution used, the overall structural strength of the cover body is further enhanced, and the deformation of the cover body is further reduced when the internal pressure of the battery cell is high, thereby further reducing the risk of separation between the cover body and the housing of the battery cell, and further improving the use safety of the battery cell.

In some embodiments of this application, the end cover assembly further includes a fourth rib disposed on the cover body, the fourth rib being disposed around the pressure relief mechanism and located between the first rib and the third rib.

With the foregoing technical solution used, the overall structural strength of the cover body is further enhanced, and the deformation of the cover body is further reduced when the internal pressure of the battery cell is high, thereby further reducing the risk of separation between the cover body and the housing of the battery cell, and further improving the use safety of the battery cell.

In some embodiments of this application, the fourth rib is provided in plurality.

With the foregoing technical solution used, the overall structural strength of the cover body is further enhanced, and the deformation of the cover body is further reduced when the internal pressure of the battery cell is high, thereby further reducing the risk of separation between the cover body and the housing of the battery cell, and further improving the use safety of the battery cell.

In some embodiments of this application, a protrusion height of the third rib relative to a surface of the cover body is 0.2 mm-3 mm.

With the foregoing technical solution used, it can be ensured that the third rib can effectively increase the welding area between the end cover assembly and the housing and prevent interference between the third rib and other components due to excessive protrusion height.

In some embodiments of this application, a width of the third rib is 0.3 mm-8 mm.

With the foregoing technical solution used, it can be ensured that the third rib can effectively enhance the welding strength between the end cover assembly and the housing and prevent interference between the third rib and other components due to excessive width.

In some embodiments of this application, the cover body has a first surface and a second surface that face away from each other, the first rib and the second rib being both disposed on the first surface, and the end cover assembly further includes a fifth rib disposed on the second surface, the fifth rib being disposed around the pressure relief mechanism.

With the foregoing technical solution used, the strength of the portion of the cover body located on the outer peripheral side of the pressure relief mechanism is further enhanced, enabling the pressure relief mechanism to be opened more quickly to discharge the gas accumulated inside the battery cell, thereby further reducing the risk of separation between the cover body and the housing of the battery cell, and further improving the use safety of the battery cell.

In some embodiments of this application, a protrusion height of the first rib relative to a surface of the cover body is 0.2 mm-6 mm.

With the foregoing technical solution used, it can be ensured that the first rib can provide sufficient reinforcement to the portion of the cover body located on the outer peripheral side of the pressure relief mechanism and prevent interference between the first rib and other components due to excessive protrusion height.

In some embodiments of this application, a width of the first rib is 0.5 mm-10 mm.

With the foregoing technical solution used, it can be ensured that the first rib can provide sufficient reinforcement to the portion of the cover body located on the outer peripheral side of the pressure relief mechanism and prevent interference between the first rib and other components due to excessive width.

According to a second aspect, an embodiment of this application provides a battery cell including a housing and the end cover assembly according to any one of the foregoing embodiments, the cover body covering the housing.

The battery cell provided in this embodiment of this application has the following beneficial effect: The battery cell provided in this embodiment of this application effectively improves the use safety of the battery cell due to the use of the end cover assembly according to any one of the foregoing embodiments.

According to a third aspect, an embodiment of this application provides a battery including the foregoing battery cell.

The battery provided in this embodiment of this application has the following beneficial effect: The battery provided in this embodiment of this application effectively improves the use safety of the battery due to the use of the foregoing battery cell.

According to a fourth aspect, an embodiment of this application provides an electric apparatus including the foregoing battery.

The electric apparatus provided in this embodiment of this application has the following beneficial effect: The electric apparatus provided in this embodiment of this application effectively improves the use safety of the electric apparatus due to the use of the foregoing battery.

### BRIEF DESCRIPTION OF DRAWINGS

To describe the technical solutions in the embodiments of this application more clearly, the following briefly describes the accompanying drawings required for describing the embodiments or illustrative techniques. Apparently, the accompanying drawings in the following description show only some embodiments of this application, and persons of ordinary skill in the art may still derive other drawings from these accompanying drawings without creative efforts.
FIG. 1 is a schematic structural diagram of a vehicle according to an embodiment of this application;
FIG. 2 is a schematic exploded view of a battery according to an embodiment of this application;
FIG. 3 is a schematic structural diagram of a battery module according to an embodiment of this application;
FIG. 4 is a schematic structural diagram of a battery cell according to an embodiment of this application;
FIG. 5 is a schematic exploded view of the battery cell shown in FIG. 4;
FIG. 6 is a schematic structural diagram of an end cover assembly in the battery cell shown in FIG. 5;
FIG. 7 is a schematic structural cross-sectional view of the end cover assembly shown in FIG. 6 along a direction A-A;
FIG. 8 is a schematic structural diagram of an end cover assembly with a weak structure and an electrode terminal removed according to an embodiment of this application;
FIG. 9 is a schematic structural diagram of an end cover assembly with a weak structure and an electrode terminal removed according to another embodiment of this application;
FIG. 10 is a schematic structural diagram of an end cover assembly with a weak structure and an electrode terminal removed according to still another embodiment of this application;
FIG. 11 is a schematic structural diagram of an end cover assembly with a weak structure and an electrode terminal removed according to yet another embodiment of this application;
FIG. 12 is a schematic structural diagram of an end cover assembly with a weak structure and an electrode terminal removed according to yet another embodiment of this application;
FIG. 13 is a schematic structural front view of the battery cell shown in FIG. 4;
FIG. 14 is a schematic structural cross-sectional view of the battery cell shown in FIG. 13 in a direction B-B; and
FIG. 15 is an enlarged schematic structural diagram of the battery cell shown in FIG. 14 at position C.

Description of reference signs:
1000. vehicle;
100. battery;
10. box; 11. first portion; 12. second portion; 13. accommodating space;
20. battery module; 21. battery cell; 211. end cover assembly; 2111. cover body; 21111. first surface; 21112. second surface; 2112. pressure relief mechanism; 21121. through hole portion; 21122. weak structure; 2113. first rib; 2114. second rib; 2115. third rib; 2116. fourth rib; 2117. fifth rib; 2118. electrode terminal; 212. housing; 2121. opening; 213. electrode assembly; 214. current collecting member;
200. controller; and
300. motor.

### DESCRIPTION OF EMBODIMENTS OF THE PRESENT INVENTION

To make the objectives, technical solutions, and advantages of this application more comprehensible, the following further describes this application in detail with reference to the accompanying drawings and embodiments. It should be understood that the specific embodiments described herein are merely used to explain this application but are not intended to limit this application.

It should be noted that when a component is referred to as being "fastened to" or "disposed on" another component, it may be directly on the another component or indirectly on the another component. When a component is referred to as being "connected to" another component, it may be directly or indirectly connected to the another component. The orientations or positional relationships indicated by the terms "upper", "lower", "left", "right", and the like are based on the orientations or positional relationships shown in the accompanying drawings. These terms are merely for ease of description rather than indicating or implying that the apparatuses or elements mentioned must have specific orientations or must be constructed or manipulated according to specific orientations, and therefore shall not be construed as any limitations on this application. Persons of ordinary skills in the art can understand specific meanings of these terms as appropriate to specific situations. The terms "first", "second", "third", "fourth", "fifth", and "sixth" are merely intended for a purpose of easy description, and shall not be understood as an indication or implication of relative importance or an implicit indication of the number of the technical features. "A plurality of" means two or more, unless otherwise specifically defined.

A battery cell is a smallest electrical energy storage element including components such as a housing, a cover body, a pressure relief mechanism, and an electrode assembly. Battery cells may be arranged in series, parallel, series-parallel, or the like to form a battery. With the rapid development of the new energy vehicle market, batteries serve as the power source of new energy vehicles, and their use safety is particularly important for the entire vehicle system. Use safety of a battery cell is a key factor in determining whether use safety of a battery meets requirements.

The inventors of this application have noticed that a cover body and a housing in an end cover assembly of a battery cell are typically connected through welding. During charging and discharging, the battery cell generates gas. When the battery cell is damaged or fails, the battery cell suddenly generates gas, causing internal pressure of the battery cell to rise rapidly. In this case, due to a large area of stress on the cover body, the cover body needs to withstand large pressure. As a result, the cover body undergoes deformation, and a portion of the cover body for mounting a pressure relief mechanism also undergoes deformation, such that the stress cannot be effectively concentrated on a weak structure of the pressure relief mechanism, resulting in failure to open the pressure relief mechanism in a timely manner. As the internal pressure of the battery cell further rises, a weld joint between the cover body and the housing gradually cracks, which eventually leads to separation between the cover body and the housing and ejection of active substances in the battery cell, easily causing fire accidents. Therefore, use safety of conventional battery cells still needs improvement.

To improve the use safety of battery cells, the inventors of this application have designed an end cover assembly through in-depth research. The end cover assembly includes a cover body, a first rib, and a second rib, where the cover body is provided with a pressure relief mechanism, the first rib and the second rib are both disposed on the cover body, the first rib is disposed around the pressure relief mechanism of the cover body, and the second rib is disposed on a side of the first rib facing away from the pressure relief mechanism, effectively enhancing strength of a portion of the cover body located on an outer peripheral side of the pressure relief mechanism. In this way, even if internal pressure of the battery cell is high, the portion of the cover body located on the outer peripheral side of the pressure relief mechanism does not undergo significant deformation, such that stress can be effectively concentrated on a weak structure of the pressure relief mechanism, enabling the pressure relief mechanism to be opened in a timely manner to discharge gas accumulated inside the battery cell, thereby effectively reducing the risk of separation between the cover body and the housing of the battery cell, and effectively improving use safety of the battery cell.

An embodiment of this application provides an electric apparatus that uses a battery 100 as a power source. The electric apparatus includes but is not limited to a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

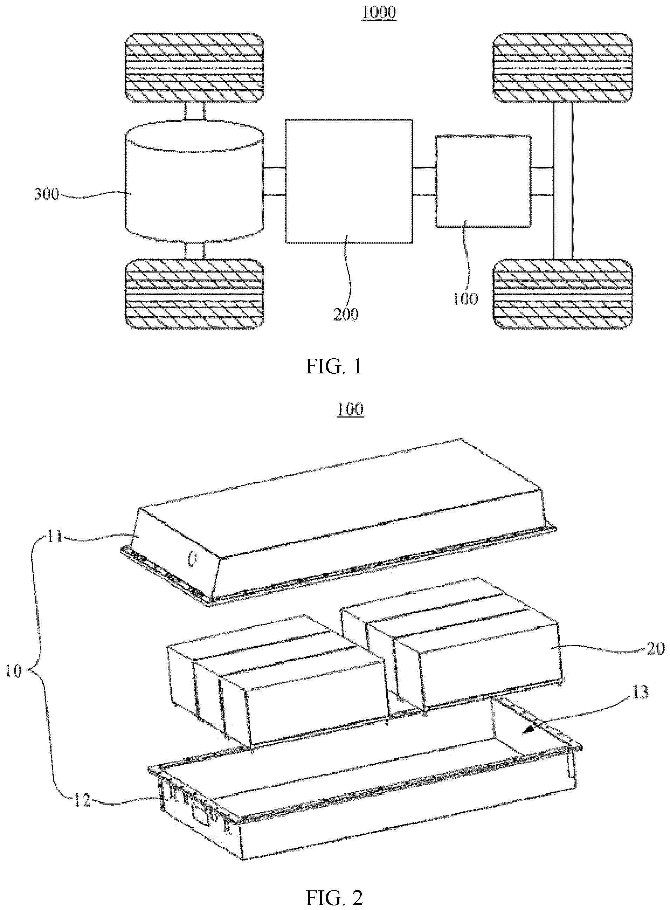

Referring to FIG. 1, FIG. 1 is a schematic structural diagram of the vehicle 1000 according to an embodiment of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, where the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic exploded view of the battery 100 according to an embodiment of this application. The battery 100 includes a box 10 and a battery cell 21, where the battery cell 21 is accommodated in the box 10. The box 10 is configured to provide an accommodating space 13 for the battery cell 21. The box 10 may be a variety of structures. In some embodiments, the box 10 may include a first portion 11 and a second portion 12. The first portion 11 and the second portion 12 fit together to jointly define an accommodating space 13 for accommodating the battery cell 21. The second portion 12 may be a hollow structure with an opening at one end, the first portion 11 may be a plate-shaped structure, and the first portion 11 covers the opening side of the second portion 12 so that the first portion 11 and the second portion 12 jointly define the accommodating space 13. Alternatively, both the first portion 11 and the second portion 12 may be hollow structures with an opening at one side, and the opening side of the first portion 11 is engaged with the opening side of the second portion 12. Certainly, the box 10 formed by the first portion 11 and the second portion 12 may be of various shapes, for example, cylinder or cuboid.

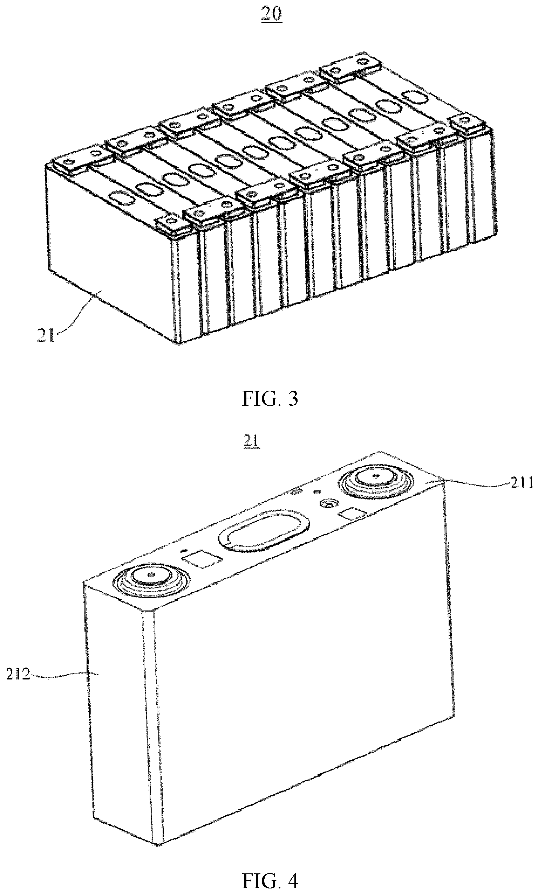

In the battery 100, the battery cell 21 may be provided in plurality, and the plurality of battery cells 21 may be connected in series, parallel, or series-parallel, where being connected in series-parallel means a combination of series and parallel connections of the plurality of battery cells 21. The plurality of battery cells 21 may be directly connected in series, parallel, or series-parallel, and then an entirety of the plurality of battery cells 21 is accommodated in the box 10. Certainly, referring to FIG. 2 and FIG. 3 together, the battery 100 may be formed by a plurality of battery cells 21 being connected in series, parallel, or series-parallel first to form a battery module 20 and then a plurality of battery modules 20 being connected in series, parallel, or series-parallel to form an entirety which is accommodated in the box 10.

Each battery cell 21 may be a secondary battery or a primary battery, and may be a lithium-sulfur battery, a sodium-ion battery, or a magnesium-ion battery, without being limited thereto. The battery cell 21 may be cylindrical, flat, cuboid, or of other shapes.

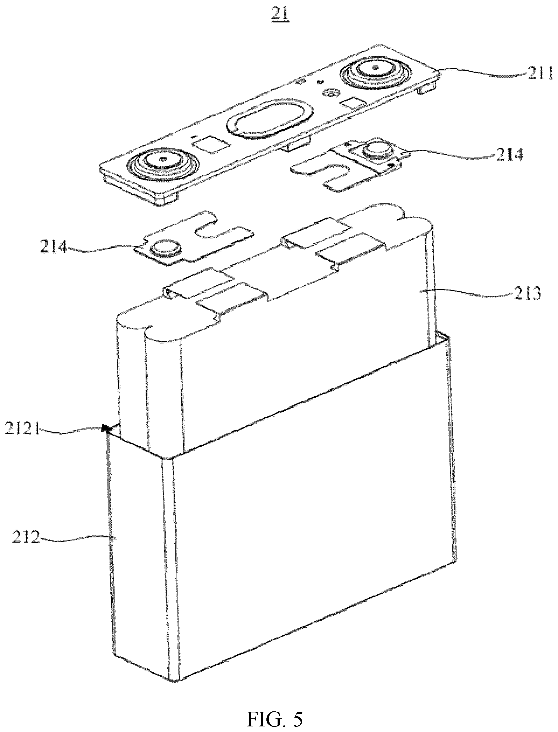

Referring to FIG. 4 and FIG. 5 together, FIG. 4 is a schematic structural diagram of the battery cell 21 according to an embodiment of this application, and FIG. 5 is a schematic exploded view of the battery cell 21 shown in FIG. 4. The battery cell 21 is a smallest electrical energy storage element constituting the battery 100. The battery cell 21 includes an end cover assembly 211, a housing 212, an electrode assembly 213, a current collecting member 214, and other functional components.

The end cover assembly 211 is a component that covers an opening 2121 of the housing 212 to isolate an internal environment of the battery cell 21 from an external environment. Shape of the end cover assembly 211 may be adapted to shape of the housing 212 to fit the housing 212. Optionally, the end cover assembly 211 is made of various materials, such as copper, iron, aluminum, stainless steel, aluminum alloy, and plastic, which are not specifically limited herein.

In some embodiments of this application, the end cover assembly 211 may be provided with functional components such as an electrode terminal 2118. The electrode terminal 2118 may be configured to be electrically connected to the electrode assembly 213 for outputting or inputting electrical energy of the battery cell 21.

In some embodiments of this application, the end cover assembly 211 may be further provided with a pressure relief mechanism 2112 for releasing internal pressure when the internal pressure or temperature of the battery cell 21 reaches a threshold. In some embodiments, the end cover assembly 211 may be further provided with an insulator. The insulator may be configured to insulate an electrical connection component in the housing 212 from the end cover assembly 211 to reduce the risk of short circuit. The insulator may be made of various materials, such as plastic, rubber, or organic material film, which are not specifically limited herein.

The housing 212 is a component configured to provide the internal environment of the battery cell 21, where the internal environment may be used to accommodate the electrode assembly 213, the current collecting member 214, an electrolyte, and other components. The housing 212 may be a separate component, the opening 2121 may be provided on the housing 212, and the end cover assembly 211 covers the opening 2121 to form the internal environment of the battery cell 21, where the components such as the electrode assembly 213 and the current collecting member 214 are accommodated in the internal environment. Specifically, the end cover assembly 211 and the housing 212 may form a shared connection surface before other components are disposed in the housing, and then the opening 2121 of the housing 212 is covered with the end cover assembly 211 when the inside of the housing 212 needs to be enclosed. Optionally, the housing 212 may be of various shapes and sizes, such as a cuboid shape, a cylindrical shape, and a hexagonal prism shape. The housing 212 is made of various materials, such as copper, iron, aluminum, stainless steel, and aluminum alloy, which are not specifically limited herein.

The electrode assembly 213 is a component in which electrochemical reactions take place in the battery cell 21. The battery cell 21 may include one or more electrode assemblies 213. The electrode assembly 213 is mainly made of a positive electrode plate, a negative electrode plate, and a separator through winding or lamination. The separator is used to insulate and separate the positive electrode plate from the negative electrode plate. Parts of the positive electrode plate and the negative electrode plate with active substances constitute a body portion of the electrode assembly 213, while a tab constituted by a part of the positive electrode plate without an active substance is a positive tab, and a tab constituted by a part of the negative electrode plate without an active substance is a negative tab. The positive tab and the negative tab may both be located at one end of the body portion of the electrode assembly 213 or be located at two ends of the body portion of the electrode assembly 213 respectively. During charging and discharging of the battery cell 21, the positive electrode active substance and the negative electrode active substance react with the electrolyte, the tab is electrically connected to the current collecting member 214, and the current collecting member 214 is electrically connected to the electrode terminal 2118 to form a current loop.

The current collecting member 214 is a conductive connection medium between the electrode assembly 213 and the electrode terminal 2118. The current collecting member 214 serves to lead a current of the electrode assembly 213 to the electrode terminal 2118 to implement electrical connection between the electrode assembly 213 and the electrode terminal 2118. Specifically, the current collecting member 214 may be connected to the tab of the electrode assembly 213 through welding, abutting, adhesion, or the like to implement electrical connection between the current collecting member 214 and the electrode assembly 213. Optionally, the current collecting member 214 is made of various materials, such as copper, iron, aluminum, steel, and aluminum alloy. The current collecting member 214 is of various shapes, such as a circular shape and a polygonal shape, which are not specifically limited herein.

The following describes in detail the technical solutions provided in this application with reference to the specific accompanying drawings and embodiments.

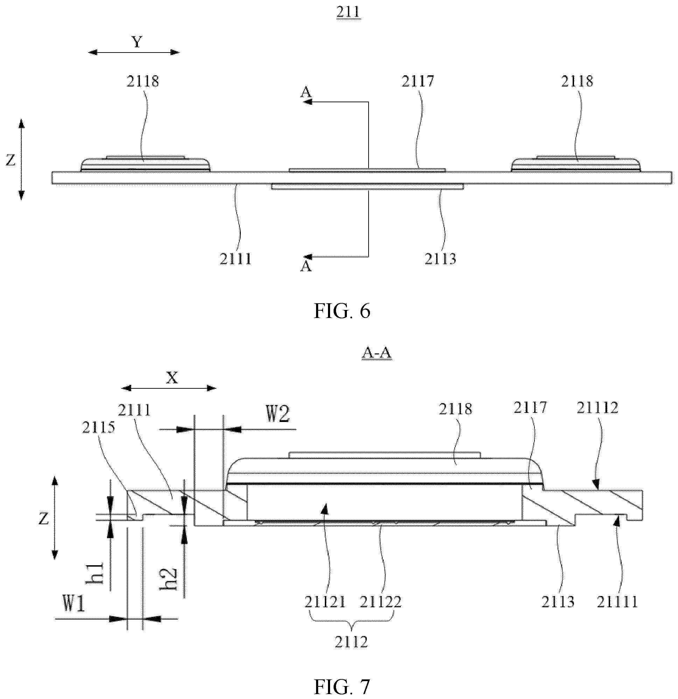

Referring to FIG. 6 to FIG. 12 together, the end cover assembly 211 includes a cover body 2111, a first rib 2113, and a second rib 2114. The cover body 2111 is provided with a pressure relief mechanism 2112, the first rib 2113 and the second rib 2114 are both disposed on the cover body 2111, the first rib 2113 is disposed around the pressure relief mechanism 2112, and the second rib 2114 is disposed on a side of the first rib 2113 facing away from the pressure relief mechanism 2112.

The cover body 2111 covers the opening 2121 of the housing 212, shape of the outer contour of the cover body 2111 is adapted to shape of the opening 2121 of the housing 212, and the cover body 2111 and the housing 212 together enclose an accommodating cavity for accommodating the electrode assembly 213 and the current collecting member 214, so as to protect the electrode assembly 213 and the current collecting member 214. The cover body 2111 may be a flat plate structure, guaranteeing mounting convenience and connection stability of the cover body 2111 and the housing 212. Optionally, the cover body 2111 is made of various materials, such as copper, iron, aluminum, stainless steel, aluminum alloy, and plastic, which are not specifically limited herein.

The first rib 2113 and the second rib 2114 are components that provide reinforcement to the cover body 2111, and both the first rib 2113 and the second rib 2114 protrude along a thickness direction (that is, the direction Z shown in FIG. 6 and FIG. 7) of the cover body 2111. Both the first rib 2113 and the second rib 2114 may be made of materials with certain strength, such as copper, iron, aluminum, stainless steel, aluminum alloy, and plastic, which are not specifically limited herein. The first rib 2113, the second rib 2114, and the cover body 2111 may be separately formed, and then the first rib 2113 and the second rib 2114 are connected to the cover body 2111 individually. The first rib 2113 and the second rib 2114 are connected to the cover body 2111 in various manners, such as welding or adhesion, which are not specifically limited herein. The first rib 2113, the second rib 2114, and the cover body 2111 may alternatively be integrally formed in various manners, such as die-casting or casting, which are not specifically limited herein. It can be understood that when the first rib 2113, the second rib 2114, and the cover body 2111 are integrally formed, the first rib 2113, the second rib 2114, and the cover body 2111 are made of the same material.

The pressure relief mechanism 2112 is a component that is configured for relieving internal pressure when the internal pressure or temperature of the battery cell 21 reaches a threshold. The threshold may be determined according to the design requirements of the battery cell 21. The threshold may depend on materials of one or more of the positive electrode plate, negative electrode plate, electrolyte, and separator in the battery cell 21. Optionally, the pressure relief mechanism 2112 may be in a form of an explosion-proof valve, a gas valve, a pressure relief valve, a safety valve, or the like, which is not specifically limited herein. Specifically, the pressure relief mechanism 2112 includes a through hole portion 21121 and a weak structure 21122. The through hole portion 21121 passes through the cover body 2111 along the thickness direction (that is, the direction Z shown in FIG. 6 and FIG. 7) of the cover body 2111. The weak structure 21122 is used to block the through hole portion 21121. Optionally, the weak structure 21122 may be connected to a portion of the cover body 2111 located on an outer peripheral side of the through hole portion 21121, or connected to an inner peripheral wall of the first rib 2113, or connected to both the portion of the cover body 2111 located on the outer peripheral side of the through hole portion 21121 and the inner peripheral wall of the first rib 2113, or connected to a side of the first rib 2113 facing away from the cover body 2111. The weak structure 21122 is mounted in various manners, such as welding or adhesion, which are not specifically limited herein. When the internal pressure or temperature of the battery cell 21 is lower than the threshold, the weak structure 21122 remains intact to block the through hole portion 21121, such that the internal environment of the battery cell 21 is isolated from the external environment. When the internal pressure or temperature of the battery cell 21 reaches the threshold, the weak structure 21122 is damaged, such that the internal environment of the battery cell 21 communicates with the external environment, thereby relieving the internal pressure of the battery cell 21 to the external environment of the battery cell 21.

The first rib 2113 being disposed around the pressure relief mechanism 2112 means that the first rib 2113 extends along the periphery of the pressure relief mechanism 2112 and encloses an annular structure. The annular structure may be a closed-loop structure or an open-loop structure, meaning that the first rib 2113 includes at least two rib segments, and the rib segments are separated from each other. For ease of description, the inner space of the annular structure can be referred to as the inner ring space of the first rib 2113, and the outer space of the annular structure can be referred to as the outer ring space of the first rib 2113. The through hole portion 21121 is located in the inner ring space of the first rib 2113, and the second rib 2114 being disposed on the side of the first rib 2113 facing away from the pressure relief mechanism 2112 means that the second rib 2114 is located in the outer ring space of the first rib 2113.

In the end cover assembly 211 provided in this embodiment of this application, the first rib 2113 and the second rib 2114 are disposed on the cover body 2111, the first rib 2113 is disposed around the pressure relief mechanism 2112 of the cover body 2111, and the second rib 2114 is disposed on the side of the first rib 2113 facing away from the pressure relief mechanism 2112, effectively enhancing strength of a portion of the cover body 2111 located on an outer peripheral side of the pressure relief mechanism 2112. In this way, even if internal pressure of the battery cell 21 is high, the portion of the cover body 2111 located on the outer peripheral side of the pressure relief mechanism 2112 does not undergo significant deformation, such that stress can be effectively concentrated on the weak structure 21122 of the pressure relief mechanism 2112, enabling the pressure relief mechanism 2112 to be opened in a timely manner to discharge gas accumulated inside the battery cell 21, thereby effectively reducing the risk of separation between the cover body 2111 and the housing 212 of the battery cell 21, and effectively improving use safety of the battery cell 21.

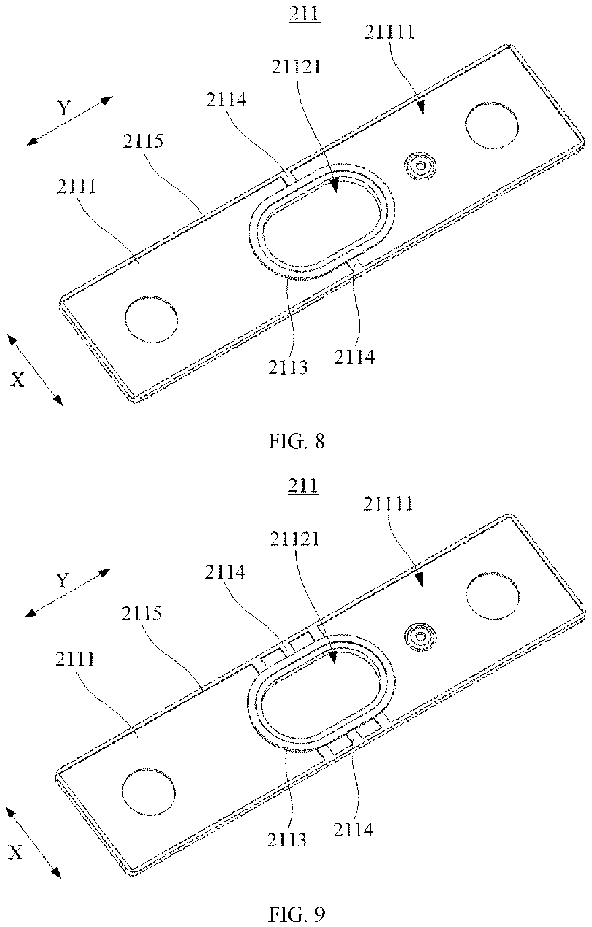

In some embodiments of this application, referring to FIG. 8 to FIG. 10 together, the second rib 2114 is provided in plurality, the second ribs 2114 being provided on two opposite sides of the first rib 2113.

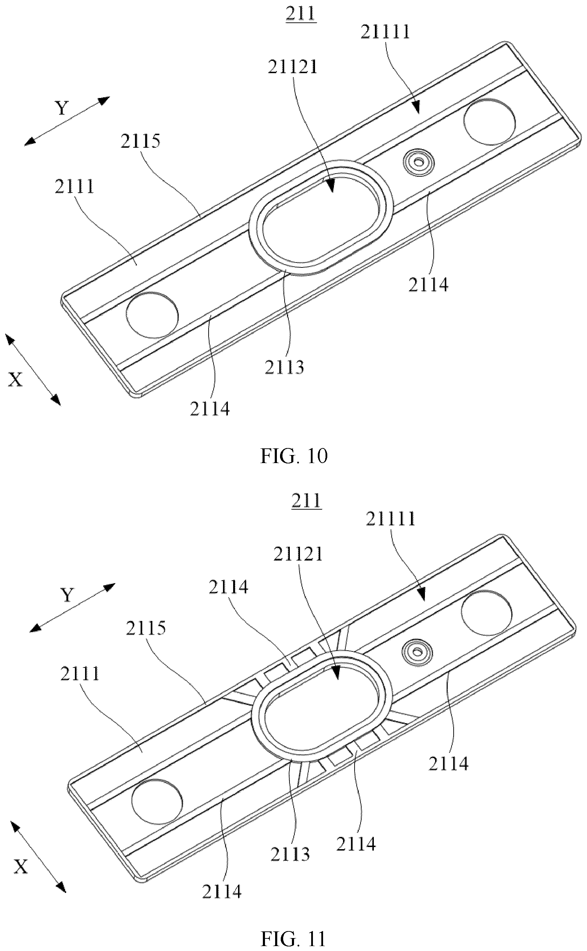

The number of second ribs 2114 may be determined according to the design requirements of the battery cell 21. For example, referring to FIG. 8, the second rib 2114 is provided in two, and one second rib 2114 is provided on each of two opposite sides of the first rib 2113. For another example, referring to FIG. 9, the second rib 2114 is provided in six, and three second ribs 2114 are provided on each of two opposite sides of the first rib 2113. For another example, referring to FIG. 10, the second rib 2114 is provided in four, and two second ribs 2114 are provided on each of two opposite sides of the first rib 2113. The second ribs 2114 provided on the same side of the first rib 2113 may or may not be parallel to each other.

The two opposite sides of the first rib 2113 may be the two opposite sides of the first rib 2113 in the direction X shown in FIG. 8 to FIG. 11 or the two opposite sides of the first rib 2113 in the direction Y shown in FIG. 8 to FIG. 11. When the battery cell 21 is a cuboid structure, the outer contour of the cover body 2111 is roughly a rectangular structure, the direction X is a width direction of the cover body 2111, and the direction Y is a length direction of the cover body 2111. In other words, referring to FIG. 8 and FIG. 9 together, the second ribs 2114 may be provided on two opposite sides of the first rib 2113 in the width direction of the cover body 2111, or referring to FIG. 10, the second ribs 2114 may be provided on two opposite sides of the first rib 2113 in the length direction of the cover body 2111.

With the foregoing technical solution used, the strength of the portion of the cover body 2111 located on the outer peripheral side of the pressure relief mechanism 2112 is further enhanced, enabling the pressure relief mechanism 2112 to be opened more quickly to discharge the gas accumulated inside the battery cell 21, thereby further reducing the risk of separation between the cover body 2111 and the housing 212 of the battery cell 21, and further improving the use safety of the battery cell 21.

In some embodiments of this application, referring to FIG. 8 to FIG. 10 together, the first rib 2113 and the plurality of second ribs 2114 are distributed to form a symmetrical structure.

The symmetrical structure may be an axisymmetric structure or a centrosymmetric structure. When the first rib 2113 and the plurality of second ribs 2114 are distributed to form an axisymmetric structure, the axisymmetric structure may be an axisymmetric structure with the central line of the cover body 2111 extending along the direction Y as the axis of symmetry or an axisymmetric structure with the central line of the cover body 2111 extending along the direction X as the axis of symmetry. When the first rib 2113 and the plurality of second ribs 2114 are distributed to form a centrosymmetric structure, the centrosymmetric structure is a centrosymmetric structure with the axis of the pressure relief mechanism 2112 as the symmetric center.

With the foregoing technical solution used, consistency of the strength on two opposite sides of the portion of the cover body 2111 located on the outer peripheral side of the pressure relief mechanism 2112 is effectively improved, which effectively avoids uneven stress on the whole cover body 2111 due to the stress being concentrated on one side of the portion of the cover body 2111 located on the outer peripheral side of the pressure relief mechanism 2112, thereby further reducing the risk of separation between the cover body 2111 and the housing 212 of the battery cell 21, and further improving the use safety of the battery cell 21.

In some embodiments of this application, referring to FIG. 11, the second rib 2114 is provided in plurality, the plurality of second ribs 2114 being distributed around the first rib 2113.

The plurality of second ribs 2114 being distributed around the first rib 2113 means that the plurality of second ribs 2114 are spaced apart sequentially along the outer periphery of the first rib 2113, where a spacing between two adjacent second ribs 2114 may be equal or unequal.

With the foregoing technical solution used, the strength of the portion of the cover body 2111 located on the outer peripheral side of the pressure relief mechanism 2112 is further enhanced, enabling the pressure relief mechanism 2112 to be opened more quickly to discharge the gas accumulated inside the battery cell 21, thereby further reducing the risk of separation between the cover body 2111 and the housing 212 of the battery cell 21, and further improving the use safety of the battery cell 21.

In some embodiments of this application, referring to FIG. 11, the first rib 2113 and the plurality of second ribs 2114 are distributed to form a symmetrical structure.

With the foregoing technical solution used, consistency of the strength at various positions of the portion of the cover body 2111 located on the outer peripheral side of the pressure relief mechanism 2112 is effectively improved, which effectively avoids uneven stress on the whole cover body 2111 due to the stress being concentrated at one position of the portion of the cover body 2111 located on the outer peripheral side of the pressure relief mechanism 2112, thereby further reducing the risk of separation between the cover body 2111 and the housing 212 of the battery cell 21, and further improving the use safety of the battery cell 21.

In some embodiments of this application, referring to FIG. 8 to FIG. 11 together, the second rib 2114 extends along a direction from the first rib 2113 to an edge of the cover body 2111.

Optionally, the second rib 2114 may extend along a straight line or a curved line, which is not specifically limited herein.

With the foregoing technical solution used, the strength of the portion of the cover body 2111 located on the outer peripheral side of the pressure relief mechanism 2112 is further enhanced, enabling the pressure relief mechanism 2112 to be opened more quickly to discharge the gas accumulated inside the battery cell 21, thereby further reducing the risk of separation between the cover body 2111 and the housing 212 of the battery cell 21, and further improving the use safety of the battery cell 21.

In some embodiments of this application, referring to FIG. 8 to FIG. 11 together, one end of the second rib 2114 is connected to the first rib 2113, and the other end of the second rib 2114 extends to the edge of the cover body 2111.

In other words, the second rib 2114 starts extending from the first rib 2113 toward the edge of the cover body 2111 and ends at the edge of the cover body 2111.

With the foregoing technical solution used, a space between the first rib 2113 and the edge of the cover body 2111 can be used maximally to maximize length of the second rib 2114, and the strength of the portion of the cover body 2111 located on the outer peripheral side of the pressure relief mechanism 2112 is further enhanced, enabling the pressure relief mechanism 2112 to be opened more quickly to discharge the gas accumulated inside the battery cell 21, thereby further reducing the risk of separation between the cover body 2111 and the housing 212 of the battery cell 21, and further improving the use safety of the battery cell 21.

In some embodiments of this application, referring to FIG. 6 and FIG. 7 together, the end cover assembly 211 further includes a third rib 2115 disposed on an edge of the cover body 2111, and a side of the third rib 2115 facing away from the pressure relief mechanism 2112 is flush with a side wall of the cover body 2111.

The side of the third rib 2115 facing away from the pressure relief mechanism 2112 being flush with the side wall of the cover body 2111 means that the side of the third rib 2115 facing away from the pressure relief mechanism 2112 and the side wall of the cover body 2111 are located in a same plane, and the side of the third rib 2115 facing away from the pressure relief mechanism 2112 and the side wall of the cover body 2111 jointly form an outer side wall of the end cover assembly 211.

In the related art, it is common to use the technical means of increasing overall thickness of the cover body 2111 to increase an area of the outer side wall of the cover body 2111, thereby increasing a welding area between the cover body 2111 and the battery cell 21. However, this increases the space occupied by the cover body 2111 in the housing 212 of the battery cell 21, resulting in a decrease in electrical capacity of the battery cell 21.

With the foregoing technical solution used, because the third rib 2115 is disposed at the edge position of the cover body 2111 and middle thickness of the cover body 2111 remains unchanged, a welding area between the end cover assembly 211 and the housing 212 of the battery cell 21 can be effectively increased without occupying too much internal space of the housing 212 of the battery cell 21, thereby effectively enhancing welding strength between the end cover assembly 211 and the housing 212 of the battery cell 21, further reducing the risk of separation between the cover body 2111 and the housing 212 of the battery cell 21, and further improving the use safety of the battery cell 21.

In some embodiments of this application, referring to FIG. 8 to FIG. 11 together, the third rib 2115 is disposed around the pressure relief mechanism 2112.

The third rib 2115 being disposed around the pressure relief mechanism 2112 means that the third rib 2115 extends along the periphery of the cover body 2111 and encloses an annular structure. The annular structure may be a closed-loop structure or an open-loop structure, meaning that the third rib 2115 includes at least two rib segments, and the rib segments are separated from each other. For ease of description, the inner space of the annular structure can be referred to as the inner ring space of the third rib 2115, and the outer space of the annular structure can be referred to as the outer ring space of the third rib 2115. The pressure relief mechanism 2112, the first rib 2113, and the second rib 2114 are all located in the inner ring space of the third rib 2115.

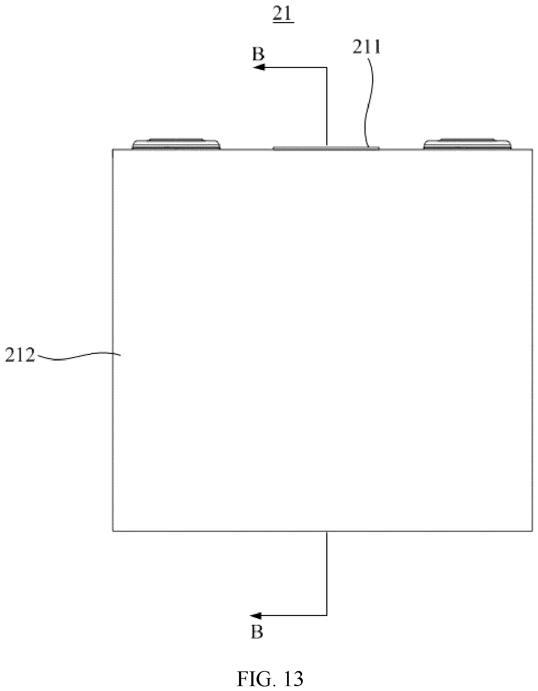

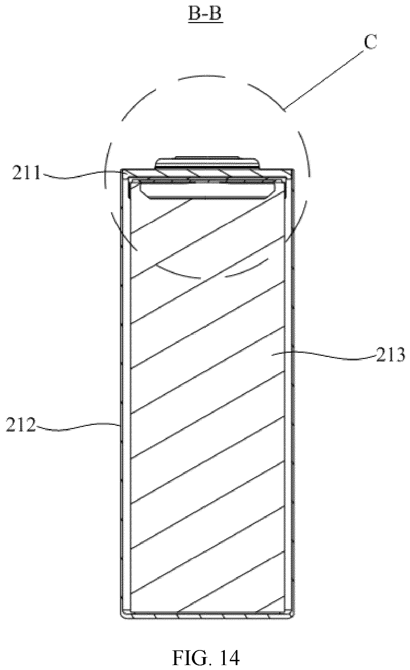

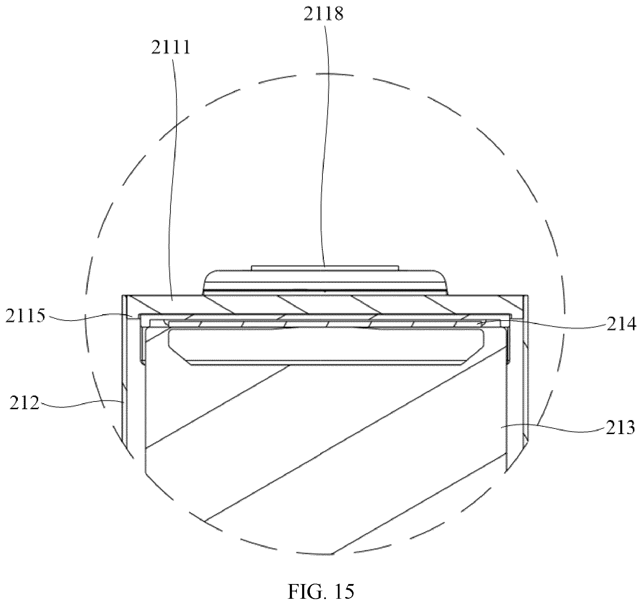

Referring to FIG. 13 to FIG. 15 together, the side of the third rib 2115 facing away from the pressure relief mechanism 2112 and the side wall of the cover body 2111 jointly form an outer peripheral wall of the end cover assembly 211, where the outer peripheral wall of the end cover assembly 211 is disposed opposite an inner peripheral wall of the housing 212 of the battery cell 21, and the outer peripheral wall of the end cover assembly 211 is welded to the inner peripheral wall of the housing 212 of the battery cell 21.

With the foregoing technical solution used, sizes of weld marks between the outer peripheral wall of the end cover assembly 211 and the inner peripheral wall of the housing 212 of the battery cell 21 become more uniform, so that stress is more evenly distributed on the outer peripheral wall of the end cover assembly 211, which further enhances the welding strength between the end cover assembly 211 and the housing 212 of the battery cell 21, further enhances overall structural strength of the cover body 2111, and further reduces deformation of the cover body 2111 when the internal pressure of the battery cell 21 is high, thereby further reducing the risk of separation between the cover body 2111 and the housing 212 of the battery cell 21, and further improving the use safety of the battery cell 21.

In some embodiments of this application, referring to FIG. 8 to FIG. 11 together, the second rib 2114 is connected between the first rib 2113 and the third rib 2115.

In other words, the second rib 2114 starts extending from the first rib 2113 toward the third rib 2115 and ends at the third rib 2115.

With the foregoing technical solution used, the overall structural strength of the cover body 2111 is further enhanced, and the deformation of the cover body 2111 is further reduced when the internal pressure of the battery cell 21 is high, thereby further reducing the risk of separation between the cover body 2111 and the housing 212 of the battery cell 21, and further improving the use safety of the battery cell 21.

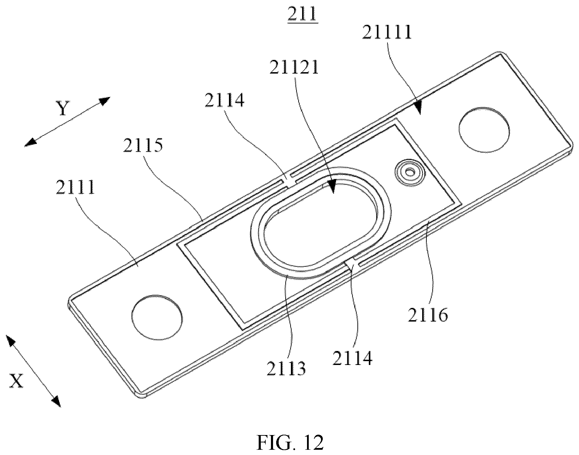

In some embodiments of this application, referring to FIG. 12, the end cover assembly 211 further includes a fourth rib 2116 disposed on the cover body 2111, the fourth rib 2116 being disposed around the pressure relief mechanism 2112 and located between the first rib 2113 and the third rib 2115.

The fourth rib 2116 being disposed around the pressure relief mechanism 2112 means that the fourth rib 2116 extends along the periphery of the pressure relief mechanism 2112 and encloses an annular structure. The annular structure may be a closed-loop structure or an open-loop structure, meaning that the fourth rib 2116 includes at least two rib segments, and the rib segments are separated from each other. For ease of description, the inner space of the annular structure can be referred to as the inner ring space of the fourth rib 2116, and the outer space of the annular structure can be referred to as the outer ring space of the fourth rib 2116.

The fourth rib 2116 being located between the first rib 2113 and the third rib 2115 means that the fourth rib 2116 is located in the inner ring space of the third rib 2115 and the first rib 2113 is located in the inner ring space of the fourth rib 2116.

When the second rib 2114 is connected between the first rib 2113 and the third rib 2115, the fourth rib 2116 is connected to the second rib 2114. In other words, the second rib 2114 is connected to the third rib 2115 after passing through the fourth rib 2116 from the first rib 2113.

With the foregoing technical solution used, the overall structural strength of the cover body 2111 is further enhanced, and the deformation of the cover body 2111 is further reduced when the internal pressure of the battery cell 21 is high, thereby further reducing the risk of separation between the cover body 2111 and the housing 212 of the battery cell 21, and further improving the use safety of the battery cell 21.

In some embodiments of this application, the fourth rib 2116 is provided in plurality.

The plurality of fourth ribs 2116 are nested with each other, meaning that one fourth rib 2116 is located in the inner ring space of another fourth rib 2116, and so on. The number of fourth ribs 2116 may be determined according to the design requirements of the battery cell 21, such as two or three, which is not specifically limited herein.

With the foregoing technical solution used, the overall structural strength of the cover body 2111 is further enhanced, and the deformation of the cover body 2111 is further reduced when the internal pressure of the battery cell 21 is high, thereby further reducing the risk of separation between the cover body 2111 and the housing 212 of the battery cell 21, and further improving the use safety of the battery cell 21.

In some embodiments of this application, referring to FIG. 7, a protrusion height h1 of the third rib 2115 relative to a surface of the cover body 2111 is 0.2 mm-3 mm.

The protrusion height h1 of the third rib 2115 refers to a size of the third rib 2115 in the thickness direction (that is, the direction Z shown in FIG. 7) of the cover body 2111. The protrusion height h1 of the third rib 2115 may be determined according to the design requirements of the battery cell 21. Specifically, the protrusion height h1 may be 0.2 mm, 1.5 mm, 3 mm, or the like, which is not specifically limited herein.

The role of the third rib 2115 is to increase the welding area between the end cover assembly 211 and the housing 212. Therefore, if the protrusion height h1 of the third rib 2115 is excessively small, the increase in the welding area between the end cover assembly 211 and the housing 212 is small, resulting in insignificant enhancement in the welding strength between the end cover assembly 211 and the housing 212; and if the protrusion height h1 of the third rib 2115 is excessively large, it leads to interference between the third rib 2115 and the components such as the current collecting member 214 and the electrode assembly 213 inside the battery cell 21. With the protrusion height h1 of the third rib 2115 limited within the foregoing range, it can be ensured that the third rib 2115 can effectively increase the welding area between the end cover assembly 211 and the housing 212, thereby enhancing the welding strength between the end cover assembly 211 and the housing 212, and prevent interference between the third rib 2115 and other components due to excessive protrusion height h1.

In some embodiments of this application, referring to FIG. 7, a width W1 of the third rib 2115 is 0.3 mm-8 mm.

The width W1 of the third rib 2115 refers to a size of the third rib 2115 in a direction perpendicular to an extension direction of the third rib 2115 and perpendicular to the thickness direction (that is, the direction Z shown in FIG. 7) of the cover body 2111. The width W1 of the third rib 2115 may be determined according to the design requirements of the battery cell 21. Specifically, the width W1 may be 0.3 mm, 4 mm, 8 mm, or the like, which is not specifically limited herein.

The third rib 2115 needs to be welded to the housing 212. Therefore, if the width W1 of the third rib 2115 is excessively small, the third rib 2115 is melted at high temperature, resulting in failure of the third rib 2115; and if the width W1 of the third rib 2115 is excessively large, it leads to interference between the third rib 2115 and the components such as the insulator in the end cover assembly 211. With the width W1 of the third rib 2115 limited within the foregoing range, it can be ensured that the third rib 2115 can effectively enhance the welding strength between the end cover assembly 211 and the housing 212 and prevent interference between the third rib 2115 and other components due to excessive width W1.

In some embodiments of this application, referring to FIG. 7, the cover body 2111 has a first surface 21111 and a second surface 21112 that face away from each other, the through hole portion 21121 passing through the first surface 21111 and the second surface 21112, and the first rib 2113 and the second rib 2114 being both disposed on the first surface 21111; and the end cover assembly 211 further includes a fifth rib 2117 disposed on the second surface 21112, the fifth rib 2117 being disposed around the pressure relief mechanism 2112.

The first surface 21111 and the second surface 21112 are two surfaces of the cover body 2111 in the thickness direction (that is, the direction Z shown in FIG. 7) of the cover body 2111. The first surface 21111 may be a surface of the cover body 2111 facing the internal environment of the battery cell 21 or a surface of the cover body 2111 facing away from the internal environment of the battery cell 21. In these embodiments, the first surface 21111 is a surface of the cover body 2111 facing the internal environment of the battery cell 21, and the second surface 21112 is a surface of the cover body 2111 facing away from the internal environment of the battery cell 21. Both the first rib 2113 and the second rib 2114 protrude on the first surface 21111, and the fifth rib 2117 protrudes on the second surface 21112. When the cover body 2111 further includes the third rib 2115 and the fourth rib 2116, both the third rib 2115 and the fourth rib 2116 protrude on the first surface 21111.

The fifth rib 2117 being disposed around the pressure relief mechanism 2112 means that the fifth rib 2117 extends along the periphery of the pressure relief mechanism 2112 and encloses an annular structure. The annular structure may be a closed-loop structure or an open-loop structure, meaning that the fifth rib 2117 includes at least two rib segments, and the rib segments are separated from each other. For ease of description, the inner space of the annular structure can be referred to as the inner ring space of the fifth rib 2117, and the outer space of the annular structure can be referred to as the outer ring space of the fifth rib 2117. The through hole portion 21121 is located in the inner ring space of the fifth rib 2117.

With the foregoing technical solution used, the strength of the portion of the cover body 2111 located on the outer peripheral side of the pressure relief mechanism 2112 is further enhanced, enabling the pressure relief mechanism 2112 to be opened more quickly to discharge the gas accumulated inside the battery cell 21, thereby further reducing the risk of separation between the cover body 2111 and the housing 212 of the battery cell 21, and further improving the use safety of the battery cell 21.

In other embodiments, to further enhance the structural strength of the cover body 2111, the end cover assembly 211 may further include a sixth rib (not shown in the figure). The sixth rib is disposed on the second surface 21112 and located on a side of the fifth rib 2117 facing away from the pressure relief mechanism 2112, and the sixth rib may be disposed around the fifth rib 2117 or extend along a direction from the fifth rib 2117 to the edge of the cover body 2111.

In some embodiments of this application, referring to FIG. 7, a protrusion height h2 of the first rib 2113 is 0.2 mm-6 mm.

The protrusion height h2 of the first rib 2113 refers to a size of the first rib 2113 in the thickness direction (that is, the direction Z shown in FIG. 7) of the cover body 2111. The protrusion height of the first rib 2113 may be determined according to the design requirements of the battery cell 21. Specifically, the protrusion height may be 0.2 mm, 3 mm, 6 mm, or the like, which is not specifically limited herein.

The role of the first rib 2113 is to enhance the strength of the portion of the cover body 2111 located on the outer peripheral side of the pressure relief mechanism 2112. Therefore, if the protrusion height h2 of the first rib 2113 is excessively small, the first rib 2113 provides insignificant reinforcement to the portion of the cover body 2111 located on the outer peripheral side of the pressure relief mechanism 2112; and if the protrusion height h2 of the first rib 2113 is excessively large, it leads to interference between the first rib 2113 and the components such as the insulator in the end cover assembly 211. With the protrusion height h2 of the first rib 2113 limited within the foregoing range, it can be ensured that the first rib 2113 can provide sufficient reinforcement to the portion of the cover body 2111 located on the outer peripheral side of the pressure relief mechanism 2112 and prevent interference between the first rib 2113 and other components due to excessive protrusion height h2.

In some embodiments of this application, referring to FIG. 7, a width W2 of the first rib 2113 is 0.5 mm-10 mm.

The width W2 of the first rib 2113 refers to a size of the first rib 2113 in a direction perpendicular to an extension direction of the first rib 2113 and perpendicular to the thickness direction (that is, the direction Z shown in FIG. 7) of the cover body 2111. The width of the first rib 2113 may be determined according to the design requirements of the battery cell 21. Specifically, the width may be 0.5 mm, 5 mm, 10 mm, or the like, which is not specifically limited herein.

The role of the first rib 2113 is to enhance the strength of the portion of the cover body 2111 located on the outer peripheral side of the pressure relief mechanism 2112. Therefore, if the width W2 of the first rib 2113 is excessively small, the first rib 2113 provides insignificant reinforcement to the portion of the cover body 2111 located on the outer peripheral side of the pressure relief mechanism 2112; and if the width W2 of the first rib 2113 is excessively large, it leads to interference between the first rib 2113 and the components such as the insulator in the end cover assembly 211. With the width W2 of the first rib 2113 limited within the foregoing range, it can be ensured that the first rib 2113 can provide sufficient reinforcement to the portion of the cover body 2111 located on the outer peripheral side of the pressure relief mechanism 2112 and prevent interference between the first rib 2113 and other components due to excessive width W2.

Referring to FIG. 4, FIG. 5, and FIG. 13 to FIG. 15 together, an embodiment of this application further provides a battery cell 21 including a housing 212 and the end cover assembly 211 according to any one of the foregoing embodiments, the cover body 2111 covering the housing 212.

The battery cell 21 provided in this embodiment of this application effectively improves the use safety of the battery cell 21 due to the use of the end cover assembly 211 according to any one of the foregoing embodiments.

Referring to FIG. 2 and FIG. 3 together, an embodiment of this application further provides a battery 100 including the foregoing battery cell 21.

The battery 100 provided in this embodiment of this application effectively improves the use safety of the battery 100 due to the use of the foregoing battery cell 21.

Referring to FIG. 1, an embodiment of this application further provides an electric apparatus including the foregoing battery 100.

The electric apparatus provided in this embodiment of this application effectively improves the use safety of the electric apparatus due to the use of the foregoing battery 100.

The foregoing descriptions are merely optional embodiments of this application which are not intended to limit this application. Persons skilled in the art understand that this application may have various modifications and variations. Any modifications, equivalent replacements, improvements, and the like made without departing from the spirit and principle of this application shall fall within the scope of the claims of this application.

## Claims

1. An end cover assembly, **characterized in that** the end cover assembly comprises:
a cover body provided with a pressure relief mechanism;
a first rib disposed on the cover body and around the pressure relief mechanism; and
a second rib disposed on the cover body and on a side of the first rib facing away from the pressure relief mechanism.

2. The end cover assembly according to claim 1, **characterized in that** the second rib is provided in plurality, the second ribs being provided on two opposite sides of the first rib.

3. The end cover assembly according to claim 2, **characterized in that** the first rib and the plurality of second ribs are distributed to form a symmetrical structure.

4. The end cover assembly according to claim 1, **characterized in that** the second rib is provided in plurality, the plurality of second ribs being distributed around the first rib.

5. The end cover assembly according to claim 4, **characterized in that** the first rib and the plurality of second ribs are distributed to form a symmetrical structure.

6. The end cover assembly according to any one of claims 1 to 5, **characterized in that** the second rib extends along a direction from the first rib to an edge of the cover body.

7. The end cover assembly according to claim 6, **characterized in that** one end of the second rib is connected to the first rib, and the other end of the second rib extends to the edge of the cover body.

8. The end cover assembly according to any one of claims 1 to 5, **characterized in that** the end cover assembly further comprises a third rib disposed on an edge of the cover body, and a side of the third rib facing away from the pressure relief mechanism is flush with a side wall of the cover body.

9. The end cover assembly according to claim 8, **characterized in that** the third rib is disposed around the pressure relief mechanism.

10. The end cover assembly according to claim 9, **characterized in that** the second rib is connected between the first rib and the third rib.

11. The end cover assembly according to claim 9, **characterized in that** the end cover assembly further comprises a fourth rib disposed on the cover body, the fourth rib being disposed around the pressure relief mechanism and located between the first rib and the third rib.

12. The end cover assembly according to claim 11, **characterized in that** the fourth rib is provided in plurality.

13. The end cover assembly according to claim 8, **characterized in that** a protrusion height of the third rib relative to a surface of the cover body is 0.2 mm-3 mm.

14. The end cover assembly according to claim 8, **characterized in that** a width of the third rib is 0.3 mm-8 mm.

15. The end cover assembly according to any one of claims 1 to 5, **characterized in that** the cover body has a first surface and a second surface that face away from each other, the first rib and the second rib being both disposed on the first surface, and the cover body further comprises a fifth rib disposed on the second surface, the fifth rib being disposed around the pressure relief mechanism.

16. The end cover assembly according to any one of claims 1 to 5, **characterized in that** a protrusion height of the first rib relative to a surface of the cover body is 0.2 mm-6 mm.

17. The end cover assembly according to any one of claims 1 to 5, **characterized in that** a width of the first rib is 0.5 mm-10 mm.

18. A battery cell, **characterized in that** the battery cell comprises a housing and the end cover assembly according to any one of claims 1 to 17, the cover body covering the housing.

19. A battery, **characterized by** comprising the battery cell according to claim 18.

20. An electric apparatus, **characterized in that** the electric apparatus comprises the battery according to claim 19.
